# EUROPEAN PATENT APPLICATION

(11) **EP 4 672 480 A1**
(43) Date of publication of application: **31.12.2025**
(21) Application number: 23932760.4
(22) Date of filing: 31.10.2023
(51) Int. Cl.: H01M 50/531, H01M 50/528, H01M 10/04

(54) **POLE CORE ASSEMBLY, BATTERY CELL, BATTERY PACK AND ELECTRIC DEVICE**

(30) Priority: 14.04.2023 CN 202320940574 U
(71) Applicant: BYD Company Limited, Shenzhen, Guangdong 518118 (CN)
(72) Inventor: GUO, Guannan, Shenzhen, Guangdong 518118 (CN); ZHANG, Lulu, Shenzhen, Guangdong 518118 (CN); YU, Tao, Shenzhen, Guangdong 518118 (CN); ZHANG, Da, Shenzhen, Guangdong 518118 (CN); HU, Haotian, Shenzhen, Guangdong 518118 (CN)
(74) Representative: Aldridge, Henry Alexander
(86) International application number: PCT/CN2023/128562
(87) International publication number: WO 2024/212489

(57) **Abstract**

An electrode core assembly (600), a battery cell (1000), a battery pack (2000), and an electric apparatus (3000) are provided. The electrode core assembly includes an electrode core (200) and a current collector plate (100). A first connection region (120) includes a middle portion (122) and a plurality of first connection portions (121) connected to the middle portion. A second connection region (130) is electrically connected to a housing body (500). An area of an orthographic projection of each of the first connection portions on a first plane is S₁, a minimum connection area between each of the first connection portions and the electrode core is S, and S≥20%Si.

## Description

### CROSS-REFERENCE TO RELATED APPLICATIONS

This application is provided based on and claims priority to Chinese Patent Application No. 2023209405741, filed on April 14, 2023, and entitled "ELECTRODE CORE ASSEMBLY, BATTERY CELL, BATTERY PACK, AND ELECTRIC APPARATUS", which is incorporated herein by reference in its entirety.

### TECHNICAL FIELD

This application belongs to the field of power apparatus technologies, and in particular, to an electrode core assembly, a battery cell, a battery pack, and an electric apparatus.

### BACKGROUND

In the conventional technology, a connection region between a current collector plate and an electrode core is small, resulting in a small current flow area of the current collector plate, and problems such as insufficient current flow and serious heat generation of the electrode core. Consequently, a service life of the electrode core is shortened, that is, a service life of a battery cell is shortened, and use safety of the battery cell is reduced.

### SUMMARY

To this end, this application provides an electrode core assembly. The electrode core assembly ensures a connection area between a current collector plate and an electrode core, thereby improving a current flow capability of the current collector plate, improving use safety of a battery cell, and prolonging a service life of the battery cell.

According to an embodiment of this application, an electrode core assembly is provided, including an electrode core and a current collector plate, where the current collector plate includes a first connection region and a second connection region that are connected to each other, the first connection region includes a middle portion and a plurality of first connection portions, the plurality of first connection portions are spaced apart in a circumferential direction of the middle portion, each of the first connection portions is connected to the middle portion, the plurality of first connection portions are electrically connected to the electrode core, and the second connection region located in one side of the first connection region is suitable for being electrically connected to a housing body; and an area of an orthographic projection of each of the first connection portions on a first plane is S₁, a minimum connection area between each of the first connection portions and the electrode core is S, the minimum connection area between each of the first connection portions and the electrode core is greater than or equal to 20% of the area of the orthographic projection of each of the first connection portions on the first plane, that is, the electrode core assembly meets the following relationship: S≥20%S₁, and a thickness direction of the current collector plate is perpendicular to the first plane.

In the electrode core assembly according to this embodiment of this application, the first connection region and the second connection region that are connected to each other are disposed, so that the first connection region and the second connection region cooperate with each other to electrically connect the electrode core to the housing body, to enable a battery cell to effectively operate. In addition, because the plurality of first connection portions are suitable for being electrically connected to the electrode core, the minimum connection area between each of the first connection portions and the electrode core is set to be not less than 20% of the area of the orthographic projection of the first connection portion on the first plane, to ensure a connection area between the current collector plate and the electrode core. On the one hand, connection strength between the current collector plate and the electrode core is improved, so that a location of the current collector plate is stable, that is, an overall structure of the electrode core assembly is stable. On the other hand, a current flow area of the current collector plate can be further increased, to avoid problems such as insufficient current flow and serious heat generation of the electrode core, thereby prolonging a service life of the electrode core, that is, prolonging a service life of the electrode core assembly.

Optionally, an identifier region is disposed on the first connection portion, and the identifier region is welded to the electrode core.

Optionally, the second connection region includes a second connection portion, the second connection portion is formed into an annular structure, the annular structure extends in a circumferential direction of the first connection region, an inner peripheral wall of the second connection portion is connected to the middle portion by using a connection member, and there is a height difference between the first connection region and the second connection region.

Optionally, the connection member obliquely extends toward the second connection portion relative to the middle portion.

Optionally, a radial width of the second connection portion is W₁, the radial width of the second connection portion is greater than or equal to 1 mm and less than or equal to half a radius of the current collector plate, that is, 1 mm≤W₁≤½R₁, and R₁ is the radius of the current collector plate.

Optionally, orthographic projections of outer peripheral walls of the plurality of first connection portions on the first plane are separately located in a same circle, each of the first connection portions is formed into a fan-shaped structure, there are a plurality of evenly spaced connection members, and the plurality of connection members and the plurality of first connection portions are alternately disposed in a circumferential direction.

Optionally, the first connection portion has a first surface connected to the electrode core, the second connection portion has a second surface connected to the housing body, and the first surface is parallel to the second surface.

Optionally, a liquid injection port penetrates through the first connection region in a thickness direction of the first connection region.

Optionally, the current collector plate is an integrally formed member.

According to an embodiment of this application, a battery cell is provided, including: a housing body, where an accommodating cavity is formed in the housing body; and an electrode core assembly, where the electrode core assembly is the foregoing electrode core assembly, the electrode core is disposed in the accommodating cavity, the current collector plate is disposed between the electrode core and the housing body, the first connection portion is electrically connected to the electrode core, and the second connection region is electrically connected to the housing body.

In the battery cell according to this embodiment of this application, the foregoing electrode core assembly is used to effectively ensure a connection area between the current collector plate and the electrode core, to avoid problems such as insufficient current flow and serious heat generation of the electrode core, thereby prolonging a service life of the battery cell, and improving use safety of the battery cell.

Optionally, a product of a quantity of first connection portions, a compensation coefficient, a current flow coefficient of the first connection portion, and the minimum connection area between the first connection portion and the electrode core is greater than or equal to a lowest current flow requirement of the electrode core, that is, the minimum connection area S between the first connection portion and the electrode core and the lowest current flow requirement C of the electrode core meet the following relational expression: nNKS≥C; and n is the quantity of first connection portions, N is the compensation coefficient, N=0.7~1, and K is the current flow coefficient of the first connection portion.

According to an embodiment of this application, a battery pack is provided, including a plurality of foregoing battery cells.

In the battery packet according to this embodiment of this application, the foregoing battery cell is used, thereby improving use safety of the battery pack, and prolonging a service life of the battery pack.

According to an embodiment of this application, an electric apparatus is provided, including the foregoing battery pack.

In the electric apparatus according to this embodiment of this application, the foregoing battery pack is used, thereby improving use safety of the electric apparatus, prolonging a service life of the electric apparatus, and reducing use costs.

Additional aspects and advantages of this application become apparent from the following descriptions or are learned from practice of this application.

### BRIEF DESCRIPTION OF DRAWINGS

The foregoing and/or additional aspects and advantages of this application will be apparent and easily understood from the description of the embodiments taken in conjunction with the following drawings, where:
FIG. 1 is a sectional view of a battery cell according to some embodiments of this application;
FIG. 2 is a schematic diagram of a structure of a current collector plate according to some embodiments of this application;
FIG. 3 is a top view of a current collector plate according to some embodiments of this application;
FIG. 4 is a side view of a current collector plate according to some embodiments of this application;
FIG. 5 is a partially enlarged view of a region I in FIG. 4;
FIG. 6 is a comparison schematic diagram of a second connection portion before and after movement according to some embodiments of this application;
FIG. 7 is a top view of a current collector plate according to some other embodiments of this application;
FIG. 8 is a schematic diagram of fitting between a current collector plate and a cover plate according to some other embodiments of this application; and
FIG. 9 is a schematic diagram of an electric apparatus according to some embodiments of this application.

### Reference numerals:

1000. battery cell; 100. current collector plate; 120. first connection region; 121. first connection portion; 122. middle portion; 1221. liquid injection port; 1222. penetration port; 1223. locating port; 130. second connection region; 131. second connection portion; 1311. reinforcement portion; 1312. avoidance port; 1313. stop protrusion; 132. limiting notch; 140. connection member; 200. electrode core; 300. cover plate; 310. limiting protrusion; 400. housing; 500. housing body; 600. electrode core assembly; 2000. battery pack; and 3000. electric apparatus.

### DESCRIPTION OF EMBODIMENTS

The following describes in detail embodiments of this application, examples of the embodiments are shown in the accompanying drawings. Same or similar reference numerals throughout the accompanying drawings indicate same or similar elements or elements having same or similar functions. The following embodiments described with reference to the accompanying drawings are exemplary and are merely intended to explain this application, but should not be understood as a limitation on this application.

The following describes an electrode core assembly 600 according to an embodiment of this application with reference to the accompanying drawings of the specification.

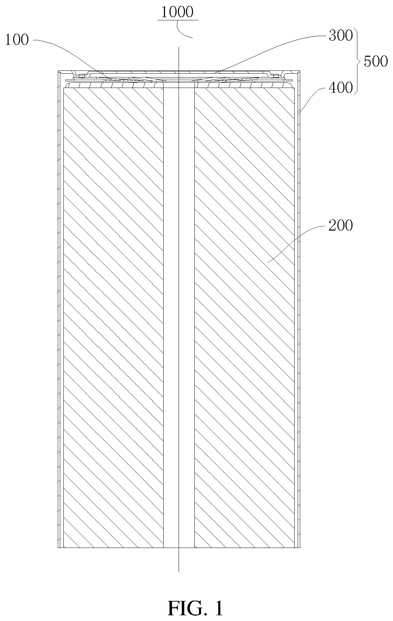

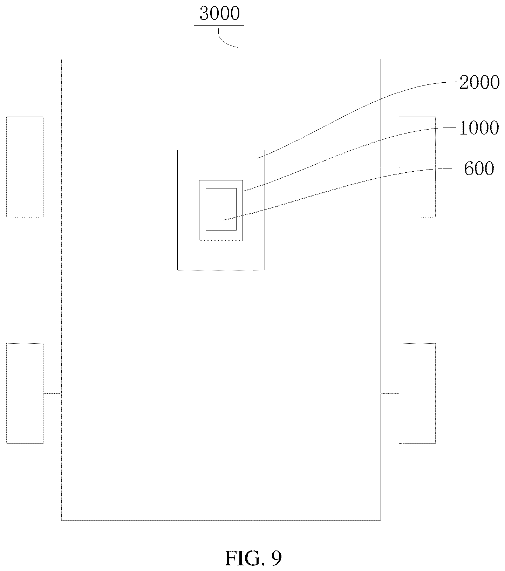

As shown in FIG. 1 and FIG. 9, the electrode core assembly 600 according to this embodiment of this application includes an electrode core 200 and a current collector plate 100.

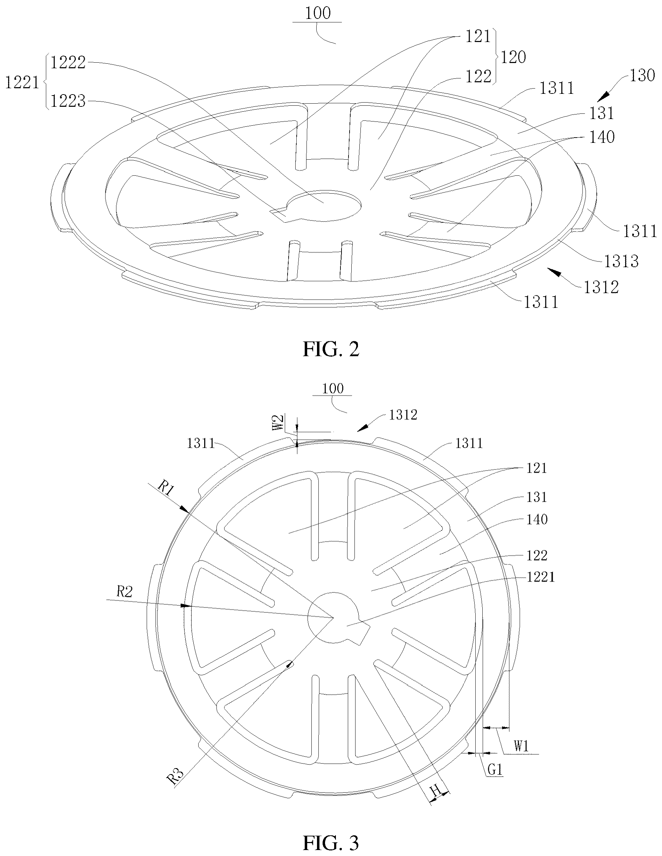

As shown in FIG. 2 and FIG. 3, the current collector plate 100 includes a first connection region 120 and a second connection region 130. The first connection region 120 and the second connection region 130 are connected to each other. The first connection region 120 includes a middle portion 122 and a plurality of first connection portions 121. The plurality of first connection portions 121 are spaced apart in a circumferential direction of the middle portion 122. Each of the first connection portions 121 is connected to the middle portion 122. The plurality of first connection portions 121 are electrically connected to the electrode core 200. The second connection region 130 is located in one side of the first connection region 120 is suitable for being electrically connected to a housing body 500. Herein, the first connection region 120 of the current collector plate 100 is suitable for being electrically connected to the electrode core 200 of the electrode core assembly 600, and the second connection region 130 of the current collector plate 100 is suitable for being electrically connected to the housing body 500, so that the electrode core 200 is electrically connected to the housing body 500, thereby ensuring that a battery cell 1000 can effectively operate.

It should be noted that the plurality of first connection portions 121 are spaced apart in the circumferential direction of the middle portion 122. On the one hand, it is ensured that all the plurality of first connection portions 121 can be connected to the middle portion 122. In this case, the middle portion 122 and the plurality of first connection portions 121 mutually support, to ensure structural stability of the first connection region 120, thereby facilitating connection to the electrode core 200 by using the first connection region 120, and reducing connection difficulty. On the other hand, circumferential space of the middle portion 122 can be further properly used, to increase an area of the first connection portion 121, and further increase a connection area between the first connection portion 121 and the electrode core 200, thereby improving a current flow capability of the current collector plate 100.

An area of an orthographic projection of each of the first connection portions 121 on a first plane is S₁, a minimum connection area between each of the first connection portions 121 and the electrode core 200 is S, the minimum connection area between each of the first connection portions 121 and the electrode core 200 is greater than or equal to 20% of the area of the orthographic projection of each of the first connection portions 121 on the first plane, that is, the electrode core assembly 600 meets the following relationship: S≥20%S₁, and a thickness direction of the current collector plate 100 is perpendicular to the first plane. That is, the first plane is perpendicular to the thickness direction of the current collector plate 100. The thickness direction of the current collector plate 100 herein may also be understood as a height direction of the electrode core 200. Therefore, the first plane may also be understood as a height direction perpendicular to the electrode core 200. The connection area between the first connection portion 121 and the electrode core 200 may be measured based on a connection mark, for example, based on a weld mark. A distinguishing boundary between the first connection portion 121 and the middle portion 122 may be a straight connection line between opposite sidewalls at a connection location between the first connection portion 121 and the middle portion 122.

In summary, in this application, the minimum connection area between each of the first connection portions 121 and the electrode core 200 is not less than 20% of the area of the orthographic projection of the first connection portion 121 on the first plane, to ensure a specific connection area between the first connection portion 121 and the electrode core 200.

In the descriptions of this application, unless otherwise stated, "a plurality of" means two or more.

It can be learned from the foregoing structure that in the electrode core assembly 600 of this embodiment of this application, the current collector plate 100 is disposed to include the first connection region 120 and the second connection region 130, so that the first connection region 120 and the second connection region 130 cooperate with each other to electrically connect the electrode core 200 to the housing body 500.

The second connection region 130 of the current collector plate 100 is disposed to be located on one side of the first connection region 120, to prevent the first connection region 120 from occupying space in a circumferential direction of the second connection region 130, and prevent the second connection region 130 from occupying space in a circumferential direction of the first connection region 120. Therefore, there is sufficient space to dispose the first connection region 120 and the second connection region 130, thereby increasing areas of the first connection region 120 and the second connection region 130, and further increasing a connection area between the first connection portion 121 and the electrode core 200 and a connection area between the second connection region 130 and the housing body 500.

That is, in this application, there are sufficient connection areas between the current collector plate 100 and both of the electrode core 200 and the housing body 500. Therefore, connection strength between the first connection portion 121 and the electrode core 200 is improved, and connection strength between the second connection region 130 and the housing body 500 is improved, so that a location of the current collector plate 100 is stable relative to the electrode core 200 and the housing body 500.

In addition, the first connection region 120 is disposed to include the plurality of first connection portions 121, and the minimum connection area between each of the first connection portions 121 and the electrode core 200 is set to be not less than 20% of the area of the orthographic projection of the first connection portion 121 on the first plane, to ensure that there is a sufficient connection area between the first connection portion 121 and the electrode core 200, thereby increasing a current flow area of the current collector plate 100, and avoiding insufficient current flow of the electrode core 200 that is caused by a small current flow area of the current collector plate 100, that is, avoiding a serious heat generation problem of the electrode core 200, to prolong a service life of the electrode core 200 and improve use safety of the electrode core 200.

In addition, the connection area between the first connection portion 121 and the electrode core 200 is limited to further reduce connection difficulty between the first connection portion 121 and the electrode core 200, thereby improving connection efficiency.

It may be understood that compared with the conventional technology, the current collector plate 100 in the electrode core assembly 600 of this application can electrically connect the electrode core 200 to the housing body 500 effectively, ensure a connection area between the current collector plate 100 and the electrode core 200, and improve the current flow capability of the current collector plate 100, thereby improving use safety of the battery cell 1000 and prolonging a service life of the battery cell 1000.

It should be noted that connection between the first connection portion 121 and the electrode core 200 and connection between the second connection region 130 and the housing body 500 both may be implemented through welding, adhesion, or the like.

Optionally, a material of the current collector plate 100 may be an aluminum alloy, pure copper, nickel-plated copper, or the like, so that the current collector plate 100 has a conductive function, so that the electrode core 200 is electrically connected to the housing body 500 by using the current collector plate 100.

In some examples, the electrode core 200 includes a tab, and the plurality of first connection portions 121 are electrically connected to the tab, to electrically connect the current collector plate 100 to the electrode core 200.

It should be noted that the tab herein may be of a full-tab structure that is knurled or flattened, or a multi-tab structure processed through laser ablation or die-cutting.

When the material of the current collector plate 100 is the aluminum alloy, the current collector plate 100 is mainly fit with a positive tab of the electrode core 200. When the material of the current collector plate 100 is pure copper or nickel-plated copper, the current collector plate 100 is mainly fit with a negative tab of the electrode core 200. That is, a person skilled in the art may select the material of the current collector plate 100 based on an application environment of the current collector plate 100. This is not specifically limited in this application.

In some examples, as shown in FIG. 2 and FIG. 3, the second connection region 130 is located on an outer side in a radial direction of the first connection region 120, to properly arrange locations of the first connection region 120 and the second connection region 130 relative to each other, thereby ensuring the areas of the first connection region 120 and the second connection region 130.

In some examples, as shown in FIG. 1, the housing body 500 includes a housing 400 and a cover plate 300. An accommodating cavity with an opening is formed in the housing 400, the electrode core 200 is disposed in the accommodating cavity, and the cover plate 300 is disposed at the opening. Electrical connection between the second connection region 130 and the housing body 500 may be electrical connection to the housing 400, so that the housing 400 is electrified, or may be electrical connection to the cover plate 300, so that the cover plate 300 is electrified.

In some embodiments of this application, an identifier region (not shown in the figures) is disposed on the first connection portion 121, and the identifier region is welded to the electrode core 200. In this way, the first connection portion 121 is electrically connected to the electrode core 200.

In addition, the identifier region is disposed to reduce connection difficulty between the first connection portion 121 and the electrode core 200 to improve connection efficiency, and disposed to determine whether the connection area between the first connection portion 121 and the electrode core 200 meets a corresponding requirement, that is, determine whether the minimum connection area between the first connection portion 121 and the electrode core 200 is greater than or equal to 20% of the area of the orthographic projection of the first connection portion 121 on the first plane.

In some examples, an area of the identifier region is equal to 20% of the area of the orthographic projection of the first connection portion 121 on the first plane. In this way, after the identifier region is completely connected to the electrode core 200, the minimum connection area between the first connection portion 121 and the electrode core 200 can meet the corresponding requirement.

Therefore, because the identifier region is disposed, a worker can determine, when connecting the first connection portion 121 to the electrode core 200 and based on whether the identifier region is completely connected to the electrode core 200, whether the minimum connection area between the first connection portion 121 and the electrode core 200 meets the requirement. After it is determined that the identifier region is completely connected to the electrode core 200, it is determined that the minimum connection area between the first connection portion 121 and the electrode core 200 meets the corresponding requirement. After it is determined that the identifier region is not completely connected to the electrode core 200, it is determined that the minimum connection area between the first connection portion 121 and the electrode core 200 does not meet the corresponding requirement. In this case, the first connection portion 121 needs to be continuously welded to the electrode core 200, until the minimum connection area between the first connection portion 121 and the electrode core 200 meets the corresponding requirement.

It should be noted that after it is determined that the identifier region is completely connected to the electrode core 200, the first connection portion 121 may be continued to be connected to the electrode core 200. A larger connection area between the first connection portion 121 and the electrode core 200 indicates a stronger current flow capability of the current collector plate 100 and higher use safety of the battery cell 1000.

Optionally, a plurality of locating portions, for example, locating grooves or locating protrusions, are disposed on the first connection portion 121, and a region enclosed by the plurality of locating portions forms the identifier region. In this way, the worker clearly observes a location and a size of the identifier region, thereby facilitating the worker in determining whether the minimum connection area between the first connection portion 121 and the electrode core 200 is greater than or equal to 20% of the area of the orthographic projection of the first connection portion 121 on the first plane.

Optionally, as shown in FIG. 2 and FIG. 3, the second connection region 130 includes a second connection portion 131, the second connection portion 131 is formed into an annular structure, the annular structure extends in a circumferential direction of the first connection region 120, an inner peripheral wall of the second connection portion 131 is connected to the middle portion 122 by using a connection member 140, and there is a height difference between the first connection region 120 and the second connection region 130. The second connection portion 131 is formed into the annular structure and the annular structure is disposed to extend in the circumferential direction of the first connection region 120, so that the second connection portion 131 is disposed to extend in the circumferential direction of the first connection region 120, to ensure an area of the second connection portion 131. In addition, the annular structure may further improve structural strength of the second connection portion 131 and prolong a service life of the second connection portion 131. Moreover, the annular structure may further enable the second connection portion 131 to be an integrally formed member, thereby facilitating processing of the second connection portion 131, and reducing manufacturing difficulty of the second connection portion 131.

In addition, in a process in which the current collector plate 100 is connected to the housing body 500, the second connection portion 131 is formed into the annular structure, to further enable an entire circle of the second connection portion 131 to be connected to the housing body 500. There is no need to dispose a separate misplacement mechanism to reduce connection difficulty between the second connection portion 131 and the housing body 500.

That is, in this application, the second connection portion 131 is disposed as the annular structure, to enable the second connection portion 131 to have a large connection area, thereby improving structural strength of the second connection portion 131, prolonging the service life of the second connection portion 131, reducing manufacturing difficulty of the second connection portion 131, and reducing connection difficulty between the second connection portion 131 and the housing body 500.

In a specific example, the second connection portion 131 is formed into an annular plate, and the annular plate is made of aluminum, copper, or another conductive material, to electrically connect the second connection portion 131 to the housing body 500.

In addition, the inner peripheral wall of the second connection portion 131 is connected to the middle portion 122 by using the connection member 140. The inner peripheral wall of the second connection portion 131 herein may be understood as a peripheral wall that is of the second connection portion 131 and that is close to the first connection region 120, to fixedly connect the second connection portion 131 to the middle portion 122. In this way, after connection to the housing body 500 is implemented by using the second connection portion 131 and connection to the electrode core 200 is implemented by using the first connection portion 121, the housing body 500 can be electrically connected to the electrode core 200.

It should be noted that the connection member 140 is disposed to fixedly connect the second connection portion 131 to the first connection portion 121, and further reduce connection difficulty between the second connection portion 131 and the first connection portion 121, thereby improving connection efficiency.

In a specific example, when the current collector plate 100 is produced, a structure between the second connection portion 131 and the middle portion 122 is cut to form the connection member 140, thereby reducing formation difficulty of the current collector plate 100, and improving connection strength between the connection member 140 and both of the second connection portion 131 and the middle portion 122.

It should be noted that in the conventional technology, the electrode core 200 is spaced from the housing body 500, resulting in a specific height between the electrode core 200 and the housing body 500. In this application, a specific height difference is set between the first connection region 120 and the second connection region 130. The height difference herein may be understood as that the first connection region 120 and the second connection region 130 are spaced apart in a height direction of the battery cell 1000, that is, the first connection region 120 and the second connection region 130 are disposed to have different heights in the battery cell 1000. In this way, the current collector plate 100 may have a specific height, so that the electrode core 200 is electrically connected to the housing body 500 by using the current collector plate 100, and the current collector plate 100 is prevented from being bent to increase the height, thereby omitting a bending process, improving connection efficiency, preventing the current collector plate 100 from being damaged and avoiding stress concentration caused by bending of the current collector plate 100, and prolonging the service life of the current collector plate 100 and improving structural strength of the current collector plate 100.

In addition, in this application, the specific height difference is directly set between the first connection region 120 and the second connection region 130. Compared with bending the current collector plate to increase the height, space occupied by the current collector plate 100 in the height direction can be reduced. In this way, the height of the electrode core 200 can be correspondingly increased, thereby increasing a capacity of the electrode core 200, that is, increasing a capacity of the battery cell 1000.

That is, in this application, the locations of the first connection region 120 and the second connection region 130 relative to each other are creatively set, to electrically connect the electrode core 200 to the housing body 500 by using the current collector plate 100, without bending the structure of the current collector plate 100, thereby improving connection efficiency, preventing the current collector plate 100 from breaking, prolonging the service life of the current collector plate 100 and improving structural strength of the current collector plate 100, reducing manufacturing difficulty of the current collector plate 100, and increasing the capacity of the electrode core 200.

In a specific example, because there is the height difference between the first connection region 120 and the second connection region 130, when the housing body 500 is connected to the electrode core 200 by using the current collector plate 100, the first connection region 120 may be first connected to the electrode core 200. Because there is the height difference between the first connection region 120 and the second connection region 130 in the height direction of the battery cell 1000, after the first connection region 120 is connected to the electrode core 200, in a process of mounting the housing body 500, the second connection region 130 may be disposed close to the housing body 500, to reduce connection difficulty between the second connection region 130 and the housing body 500. It should be noted that as a conductive element, the current collector plate 100 is generally made of a metal conductive material such as copper, aluminium, or iron, which naturally has characteristics such as elasticity and deformability. In this case, the height difference set between the first connection region 120 and the second connection region 130 enables the locations of the first connection region 120 and the second connection region 130 to change under the action of an external force, that is, when the cover plate 300 is mounted, the cover plate 300 compacts the second connection region 130 of the current collector plate 100, so that the first connection region 120 and the second connection region 130 are movable relative to each other.

In some examples, an inner diameter of the second connection region 130 is greater than an outer diameter of the first connection region 120, to dispose the second connection region 130 located in the circumferential direction of the first connection region 120 to be located on the outer side in the radial direction of the first connection region 120, thereby increasing areas of the first connection portion 121 and the second connection portion 131.

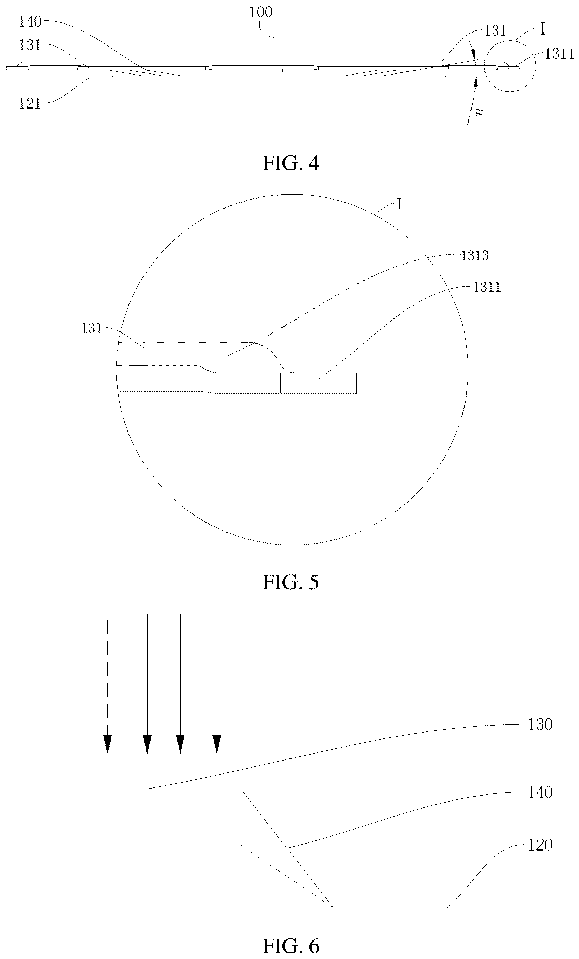

Optionally, as shown in FIG. 2 and FIG. 4, the connection member 140 obliquely extends toward the second connection portion 131 relative to the middle portion 122. It should be understood herein that the connection member 140 is obliquely disposed relative to the middle portion 122 and obliquely extends toward the second connection portion 131. In this way, when the middle portion 122 is fixedly connected to the second connection portion 131 by using the connection member 140, it can be further ensured that the middle portion 122 is spaced from the second connection portion 131 in the height direction of the battery cell 1000 after being connected by using the connection member 140, that is, ensured that there is the height difference between the first connection region 120 and the second connection region 130, thereby electrically connecting the electrode core 200 to the housing body 500 by using the current collector plate 100.

Optionally, the connection member 140 is a plate body. When the plate body obliquely extends relative to the first connection portion 121, it can be ensured that the connection member 140 can move and/or deform relative to the first connection portion 121 under the action of an external force, so that relative movement between the first connection region 120 and the second connection region 130 is ensured, thereby changing the height of the current collector plate 100, and expanding a use range of the current collector plate 100. It should be noted that the current collector plate 100, as the conductive element, is generally made of the metal conductive material such as copper, aluminium, or iron, which naturally has the characteristics such as elasticity and deformability. In this case, the connection member 140 is constructed as an obliquely extending plate body, to implement movement and/or deformation, and implement relative movement and adjustment of the location of the second connection region 130.

The movement and/or deformation herein may be understood as that the connection member 140 is constructed as being movable relative to the first connection portion 121, the connection member 140 is constructed as being deformable relative to the first connection portion 121, or the connection member 140 is constructed as being movable relative to the first connection portion 121 and being deformable relative to the first connection portion 121, to change a height difference between the first connection portion 121 and the second connection region 130 by using the connection member 140 and enable the first connection region 120 and the second connection region 130 to be movable relative to each other, thereby adjusting the location of the second connection region 130 relative to the first connection portion 121, that is, adjusting locations of the second connection region 130 and the housing body 500 relative to each other.

That is, in this application, the first connection region 120 and the second connection region 130 are different in height and movable relative to each other. Relative movement herein may be understood as that the first connection region 120 is movable relative to the second connection region 130, the second connection region 130 is movable relative to the first connection region 120, or the first connection region 120 and the second connection region 130 are movable relative to each other.

FIG. 6 is a schematic diagram of the second connection region 130 before and after movement. A solid line part is a location of the second connection region 130 before movement, and a dashed line part is a location of the second connection region 130 after movement.

In addition, because the first connection region 120 and the second connection region 130 are disposed to be movable relative to each other, in the process in which the current collector plate 100 is connected to the housing body 500, a welding gap between the current collector plate 100 and the housing body 500 that is caused by changing locations of the housing body 500 and the electrode core 200 can be avoided, and a welding gap between the current collector plate 100 and the housing body 500 that is caused by greatly varying flatness of a plurality of welding locations on the housing body 500 or greatly varying flatness of the second connection region 130 can be further avoided, thereby reducing a possibility of poor welding between the current collector plate 100 and the housing body 500, and ensuring a yield of the battery cell 1000.

Specifically, when flatness of a connection surface that is of the housing body 500 and that fits with the second connection portion 131 is large, locations of the second connection portion 131 and the first connection portion 121 relative to each other can be adaptively adjusted by the second connection portion 131 based on the flatness of the housing body 500, to further improve connection strength between the second connection portion 131 and the housing body 500, and ensure conformity of opposite contact surfaces of the second connection portion 131 and the housing body 500, thereby reducing the possibility of poor welding, and subsequently ensuring the yield of the battery cell 1000.

This may also be understood as that in this application, when the current collector plate 100 is connected to the housing body 500, the current collector plate 100 may absorb a manufacturing error of the housing body 500 by using the second connection portion 131, thereby subsequently improving manufacturing precision of the battery cell 1000.

In addition, the first connection region 120 and the second connection region 130 are disposed to be movable relative to each other. Such an arrangement may further reduce the space occupied by the current collector plate 100 in the height direction. In this way, when the electrode core 200 is connected to the housing body 500 by using the current collector plate 100, a height of reserved space between the electrode core 200 and the housing body 500 may be decreased, that is, the height of the electrode core 200 may be increased, thereby increasing the capacity of the electrode core 200, and further increasing the capacity of the battery cell 1000.

In a specific example, because the first connection region 120 and the second connection region 130 are different in height and movable relative to each other, when the housing body 500 is connected to the electrode core 200 by using the current collector plate 100, the first connection region 120 may be first connected to the electrode core 200. Because there is a height difference between the first connection region 120 and the second connection portion 131 in the height direction of the battery cell 1000, after the first connection region 120 is connected to the electrode core 200, in the process of mounting the housing body 500, the second connection portion 131 may be disposed close to the housing body 500, to reduce connection difficulty between the second connection portion 131 and the housing body 500. In addition, because the first connection region 120 and the second connection portion 131 are movable relative to each other, when the second connection portion 131 is connected to the housing body 500 in this case, it can be ensured that the location of the second connection portion 131 can change based on a location, a shape, a surface structure, and the like of the housing body 500, so that the second connection portion 131 can be effectively connected to the housing body 500, to ensure connection strength and a connection area, thereby connecting the housing body 500 to the electrode core 200 by using the current collector plate 100, reducing the possibility of poor welding between the current collector plate 100 and the housing body 500, and ensuring the yield of the battery cell 1000.

Optionally, the connection member 140 is formed into a rectangular plate, to fixedly connect the second connection portion 131 to the middle portion 122 by using the connection member 140, and ensure that the second connection portion 131 can be located on the outer side in the radial direction of the first connection region 120 after connection completes and ensure that the second connection portion 131 can drive the connection member 140 to act under the action of an external force.

Certainly, in some other examples, the connection member 140 may alternatively be formed into a square plate, a fan-shaped plate, or the like. This is not specifically limited in this application.

In a specific example, because the connection member 140 can move and/or deform relative to the first connection portion 121, when the current collector plate 100 is separately connected to the electrode core 200 and the housing body 500, if the housing body 500 has the manufacturing error, a welding location protruding toward the electrode core 200 generates force driving the corresponding second connection portion 131 to move toward the electrode core 200. Because the second connection portion 131 is connected to the first connection portion 121 by using the obliquely extending plate body, and the obliquely extending plate body easily changes in location or deforms under the action of an external force, when the housing body 500 drives the corresponding second connection portion 131 to move toward the electrode core 200, the second connection portion 131 can drive the obliquely extending plate body to act, to ensure that the second connection portion 131 can effectively move, that is, ensure that the location of the second connection portion 131 can change based on the location of the housing body 500, so that the second connection portion 131 can be connected to the housing body 500, and a fitting gap between the second connection portion 131 and the housing body 500 can be avoided, thereby ensuring conformity of opposite contact surfaces of the current collector plate 100 and the housing body 500, and reducing the possibility of poor welding.

It should be noted that the second connection portion 131 can drive the obliquely extending plate body to act. A specific action of the plate body may be as follows: The second connection portion 131 drives one end of the plate body connected thereto to move toward the electrode core 200, and in a process in which the end of the plate body moves, the other end of the plate body is fixed relative to the electrode core 200, so that the entire plate body rotates toward the electrode core 200, thereby implementing movement of the connection member 140 relative to the first connection portion 121; or the second connection portion 131 drives one end of the plate body connected thereto to be bent toward the electrode core 200, and in a bending process, the other end of the plate body may be fixed relative to the electrode core 200, thereby implementing deformation of the connection member 140 relative to the first connection portion 121.

Optionally, the connection member 140 is made of a conductive material such as aluminum or copper. When the first connection region 120 is connected to the second connection portion 131 by using the connection member 140, it is ensured that, under the action of an external force, the second connection portion 131 can effectively drive the obliquely extending connection member 140 to act, that is, the connection member 140 can effectively move and/or deform relative to the first connection region 120, to change the height difference between the first connection region 120 and the second connection portion 131.

It should be noted that a specific length, a specific width, and a specific thickness of the connection member 140 are not limited in this application, provided that it is ensured that the connection member 140 can effectively connect the first connection region 120 to the second connection portion 131, and it is ensured that, under the action of an external force, the second connection portion 131 can effectively drive the obliquely extending connection member 140 to act.

Certainly, in some other examples, the connection member 140 may alternatively be a buffer spring. One end of the buffer spring is connected to the second connection portion 131, and the other end of the buffer spring is connected to the first connection region 120. In this way, the connection member 140 may be constructed as being movable relative to the first connection region 120 and/or being deformable relative to the first connection region 120, to change the height difference between the first connection region 120 and the second connection portion 131.

In a specific example, when the connection member 140 is a buffer spring, and when the current collector plate 100 is separately connected to the electrode core 200 and the housing body 500, if flatness of the plurality of welding locations on the housing body 500 greatly varies, the welding location protruding toward the electrode core 200 generates force driving the corresponding second connection portion 131 to move toward the electrode core 200, and the second connection portion 131 compresses the buffer spring to deform the buffer spring, thereby changing the height difference between the first connection region 120 and the second connection portion 131.

In some examples, a range of an oblique angle of the connection member 140 relative to the middle portion 122 is 5°≤a<90°. When the range of the oblique angle of the connection member 140 relative to the middle portion 122 is less than 5°, an overall height of the current collector plate 100 is low, resulting in a failure that the electrode core 200 cannot be electrically connected to the housing body 500 by using the current collector plate 100 effectively. When the range of the oblique angle of the connection member 140 relative to the middle portion 122 is greater than or equal to 90°, on the one hand, an overall height of the current collector plate 100 is high, the current collector plate 100 occupies large space, and the current collector plate 100 occupies arrangement space of the electrode core 200, resulting in a decrease in the capacity of the electrode core 200; and on the other hand, the connection member 140 cannot effectively drive the second connection portion 131 to move, that is, the connection member 140 cannot effectively change the height difference between the first connection region 120 and the second connection region 130, and the poor welding problem caused by the manufacturing error cannot be resolved.

Therefore, in this application, the range of the oblique angle a of the connection member 140 relative to the middle portion 122 is set to 5°≤a<90°. In this way, it is ensured that the electrode core 200 can be electrically connected to the housing body 500 by using the current collector plate 100 effectively, the height difference between the first connection region 120 and the second connection region 130 can be further effectively changed by using the connection member 140, and the overall height of the current collector plate 100 can be further prevented from being excessively high to ensure the capacity of the electrode core 200.

In a specific example, the oblique angle a of the connection member 140 relative to the middle portion 122 may be 5°, 10°, 20°, 30°, 40°, 50°, 60°, 70°, 80°, or the like.

Optionally, a height range between the first connection region 120 and the second connection region 130 is 1 mm-10 mm. Specific height values of the first connection region 120 and the second connection region 130 may be adjusted based on the oblique angle a of the connection member 140. The height range between the first connection region 120 and the second connection region 130 is set to 1 mm-10 mm, to ensure that the oblique angle a of the connection member 140 relative to the first connection portion 121 can be in a range of 5°-90°. Therefore, it is ensured that the height difference between the first connection region 120 and the second connection region 130 can be effectively changed by using the connection member 140, and the overall height of the current collector plate 100 can be further prevented from being excessively high to ensure the capacity of the electrode core 200.

In a specific example, a height between the first connection region 120 and the second connection region 130 may be 1 mm, 3 mm, 5 mm, 8 mm, 10 mm, or the like.

It should be noted that the height between the first connection region 120 and the second connection region 130 may be understood as, in the height direction of the battery cell 1000, a distance between surfaces of the second connection portion 131 and the first connection portion 121 that face each other.

Specifically, as shown in FIG. 2 and FIG. 3, the first connection region 120 includes the middle portion 122 and the plurality of first connection portions 121. The middle portion 122 is formed into a circular aluminum plate or circular copper plate. The first connection portion 121 is formed into a fan-shaped aluminum plate or fan-shaped copper plate. The plurality of first connection portions 121 surround a periphery of the middle portion 122 and are separately connected to the middle portion 122, and the plurality of first connection portions 121 are spaced apart. A connection member 140 formed into a rectangular aluminum plate or rectangular copper plate is disposed between two adjacent first connection portions 121, and in the circumferential direction of the first connection region 120, the connection member 140 and the first connection portion 121 are spaced apart. A first end that is of the connection member 140 and that is in the radial direction of the first connection region 120 is connected to the middle portion 122.

As shown in FIG. 1 and FIG. 2, the second connection portion 131 is formed into an annular aluminum plate or annular copper plate. The second connection portion 131 surrounds a periphery of the first connection region 120. A second end that is of the connection member 140 and that is in the radial direction of the first connection region 120 is connected to the second connection portion 131. In addition, the connection member 140 obliquely extends relative to the first connection region 120, so that the first connection region 120 and the second connection region 130 are spaced apart in the height direction of the battery cell 1000.

In a specific example, when the current collector plate 100 is separately connected to the electrode core 200 and the housing body 500, the first connection region 120 is first connected to the electrode core 200. Because there is the height difference between the first connection region 120 and the second connection region 131 in the height direction of the battery cell 1000, the housing body 500 can effectively contact and fit with the second connection portion 131 in the process of mounting the housing body 500. In addition, in a process of connecting the housing body 500 to the second connection portion 131, if there is the welding location protruding toward the electrode core 200 on the housing body 500, the welding location drives the second connection portion 131 to move toward the electrode core 200, and the second connection portion 131 drives the second end of the connection member 140 to rotate toward the electrode core 200 around the first end or drives the second end of the connection member 140 to bend toward the electrode core 200, so that the housing body 500 drives the connection member 140 to move and/or deform relative to the first connection region 120, thereby changing the height of the current collector plate 100, enabling the current collector plate 100 to be effectively connected to the housing body 500, ensuring conformity of the opposite contact surfaces of the current collector plate 100 and the housing body 500, and reducing the possibility of poor welding.

Optionally, as shown in FIG. 2 and FIG. 3, there are a plurality of connection members 140. In the circumferential direction of the first connection region 120, the plurality of first connection portions 121 and the plurality of connection members 140 are alternately disposed to be spaced apart. The circumferential direction herein may be understood as that when the current collector plate 100 is formed into a circular current collector plate, the plurality of first connection portions 121 and the plurality of connection members 140 are alternately disposed to be spaced apart in the circumferential direction of the current collector plate 100. "Alternately disposed to be spaced apart" means that one connection member 140 is disposed between two adjacent first connection portions 121, and correspondingly, one first connection portion 121 is disposed between two adjacent connection members 140, to properly use space of the current collector plate 100, so that the plurality of first connection portions 121 and the plurality of connection members 140 can be simultaneously disposed on the same current collector plate 100, thereby increasing the current flow area of the current collector plate 100 by using the plurality of first connection portions 121, and ensuring that the second connection portion 131 can be connected to the middle portion 122 by using the connection members 140.

In some examples, as shown in FIG. 3, the plurality of first connection portions 121 are spaced apart in the circumferential direction of the current collector plate 100, and the connection member 140 is disposed between two adjacent first connection portions 121, so that the plurality of first connection portions 121 and the plurality of connection members 140 can be alternately disposed in the circumferential direction of the middle portion 122, thereby simultaneously disposing the plurality of first connection portions 121 and the plurality of connection members 140 on the current collector plate 100.

Optionally, as shown in FIG. 3, the connection members 140 and the first connection portions 121 are spaced apart in the circumferential direction of the current collector plate 100 to prevent the first connection portions 121 from hindering deformation and/or movement of the connection members 140, that is, ensure that the connection members 140 can effectively move and/or deform relative to the middle portion 122, to change the height difference between the first connection region 120 and the second connection portion 131, thereby eliminating poor welding impact caused by the manufacturing error.

Optionally, a range of a circumferential distance between the first connection portion 121 and the connection member 140 is 0.5 mm-2 mm. In this way, the connection member 140 and the first connection portion 121 are spaced apart, to ensure that the connection member 140 can effectively move and/or deform relative to the middle portion 122.

In some embodiments of this application, as shown in FIG. 3, the first connection portion 121 and the inner peripheral wall of the second connection portion 131 are spaced apart to form a spacing gap, a value range of a radial size G₁ of an orthographic projection of the spacing gap on the first plane is 0.5 mm-2 mm, and the first plane is perpendicular to the thickness direction of the current collector plate 100. Herein, the first connection portion 121 and the inner peripheral wall of the second connection portion 131 are spaced apart and the spacing gap is formed between the first connection portion 121 and the inner peripheral wall of the second connection portion 131. The radial size of the orthographic projection of the spacing gap on a plane perpendicular to the height direction of the battery cell 1000 is G₁, and the value range of G₁ is 0.5 mm-2 mm. When G₁ is less than 0.5 mm, a distance between the first connection portion 121 and the second connection portion 131 is small, and in this case, the first connection portion 121 and the second connection portion 131 do not have relative locations, that is, there is no effective height difference between the first connection portion 121 and the second connection portion 131 to reduce formation difficulty of the current collector plate 100. When G₁ is greater than 2 mm, the areas/area of the first connection portion 121 and/or the second connection portion 131 decrease/decreases, that is, the connection area between the first connection portion 121 and the electrode core 200 and/or the connection area between the second connection portion 131 and the housing body 500 decrease/decreases, resulting in a poor current flow capability of the current collector plate 100, and a failure of ensuring location stability of the current collector plate 100 after connection.

Therefore, in this application, the radial size G₁ of the orthographic projection that is of the spacing gap formed by spacing the first connection portion 121 from the inner peripheral wall of the second connection portion 131 and that is on the plane perpendicular to the height direction of the battery cell 1000 is set to between 0.5 mm-2 mm, to ensure the effective height difference between the first connection portion 121 and the second connection portion 131, and further ensure the areas of the first connection portion 121 and the second connection portion 131.

In some specific examples, the radial size G₁ of the orthographic projection that is of the spacing gap formed by spacing the first connection portion 121 from the inner peripheral wall of the second connection portion 131 and that is on the plane perpendicular to the height direction of the battery cell 1000 may be 0.5 mm, 1 mm, 1.5 mm, 2 mm, or the like.

In some examples, as shown in FIG. 3, a spacing between opposite sidewalls of each of the first connection portions 121 gradually increases in a direction facing away from the middle portion 122. In this way, the area of the first connection portion 121 increases, thereby ensuring a sufficient connection area between the first connection portion 121 and the tab of the electrode core 200. Therefore, it is ensured that the current collector plate 100 has a large current flow area, insufficient current flow of the electrode core 200 that is caused by a small current flow area of the current collector plate 100 is avoided, a serious heat generation problem of the electrode core 200 is avoided, and the service life of the electrode core 200 is prolonged and use safety of the electrode core 200 is improved.

In some examples, the first connection portion 121 may be formed in a fan shape in FIG. 3. The fan shape may enable the spacing between the opposite sidewalls of the first connection portion 121 to gradually increase in the direction facing away from the middle portion 122, thereby increasing the area of the first connection portion 121.

Certainly, in some other examples, the first connection portion 121 may alternatively be formed in a triangle shape, a rectangle shape, a circular shape, or the like. This is not limited in this application.

Optionally, as shown in FIG. 3, a radial width of the second connection portion 131 is W₁, the radial width of the second connection portion 131 is greater than or equal to 1 mm and less than or equal to half a radius of the current collector plate 100, that is, 1 mm≤W₁≤½R₁, and R₁ is the radius of the current collector plate 100. The radial width of the second connection portion 131 herein may be understood as a width that is of the second connection portion 131 and that extends in a radial direction of the current collector plate 100 when the current collector plate 100 is formed into the circular current collector plate. Because the second connection portion 131 is disposed on the outer side in the radial direction of the first connection portion 121, and the radius of the current collector plate 100 is fixed, the foregoing arrangement ensures that the connection area of the second connection portion 131 can meet a lowest connection requirement, and ensures that the first connection portion 121 has a sufficient connection area, thereby electrically connecting the electrode core 200 to the housing body 500 by using the current collector plate 100.

Optionally, when the current collector plate 100 is the circular current collector plate, the radius R₁ of the current collector plate 100 = 10 mm-100 mm. It is ensured that a size of the current collector plate 100 can be simultaneously adapted to the electrode core 200 and the housing body 500, thereby electrically connecting the electrode core 200 to the housing body 500 by using the current collector plate 100, and ensuring sufficient connection areas between the current collector plate 100 and both of the electrode core 200 and the housing body 500.

Certainly, in some other examples, the radius of the current collector plate 100 is not limited to 10 mm-100 mm. A person skilled in the art may limit the radius of the current collector plate 100 based on practical areas of the electrode core 200 and the housing body 500, to ensure the sufficient connection areas between the current collector plate 100 and both of the electrode core 200 and the housing body 500.

The current collector plate 100 is disposed as the circular current collector plate, so that a shape of the current collector plate 100 can be adapted to shapes of the electrode core 200 and the housing body 500, to reduce connection difficulty between the current collector plate 100 and both of the electrode core 200 and the housing body 500, and ensure connection quality.

In some specific examples, as shown in FIG. 2 and FIG. 3, the middle portion 122 is formed into a circular support plate. The plurality of first connection portions 121 are all formed into fan-shaped connection plates. The plurality of first connection portions 121 are connected to an outer side in a radial direction of the middle portion 122 and are spaced apart in the circumferential direction of the middle portion 122. In this way, after the plurality of first connection portions 121 are connected to the middle portion 122, the first connection region 120 may be formed in a circular shape, so that the first connection region 120 is adapted to the electrode core 200 in shape, thereby increasing the connection area between the first connection region 120 and the electrode core 200.

Optionally, a radius of the first connection region 120 is R₂, and ½R₁□R₂□R₁. The radius of the first connection region 120 herein may also be understood as a radial size of the first connection region 120 when the first connection region 120 is formed in the circular shape. It should be noted that R₂ is set to be less than R₁ to reserve specific arrangement space for the second connection portion 131, thereby ensuring that the second connection portion 131 has a specific area to increase the connection area between the second connection portion 131 and the housing body 500; and R₂ is set to be greater than or equal to ½R₁, thereby ensuring that the first connection region 120 has a specific area to increase the connection area between the first connection region 120 and the electrode core 200.

That is, in this application, a relationship between R₂ and R₁ is set to ensure both the first connection portion 121 and the second connection portion 131 have specific connection areas, thereby fixedly connecting the current collector plate 100 to the electrode core 200 and fixedly connecting the current collector plate 100 to the housing body 500, and ensuring that the current collector plate 100 has a large current flow area.

Optionally, as shown in FIG. 3, a radius of the middle portion 122 is R₃, and 5 mm□R₃□½R₂. It should be noted that the radius of the middle portion 122 herein may also be understood as a radial size of the middle portion 122 when the middle portion 122 is formed into the circular support plate. Because the radius of the first connection region 120 is a fixed value, a relationship between the radius R₃ of the middle portion 122 and R₂ is set, to ensure that both the first connection portion 121 and the middle portion 122 have specific connection areas, thereby fixedly connecting the current collector plate 100 to the electrode core 200, and ensuring that the current collector plate 100 has a large current flow area.

Optionally, as shown in FIG. 2 and FIG. 3, orthographic projections of outer peripheral walls of the plurality of first connection portions 121 on the first plane are separately located in a same circle, each of the first connection portions 121 is formed into a fan-shaped structure, there are a plurality of evenly spaced connection members 140, and the plurality of connection members 122 and the plurality of first connection portions 121 are alternately disposed in a circumferential direction. The circumferential direction herein may be understood as alternate arrangement in the circumferential direction of the current collector plate 100. The plurality of connection members 122 and the plurality of first connection portions 121 are alternately disposed in the circumferential direction to properly use space inside the current collector plate 100, and form the current collector plate 100 into the circular structure, thereby electrically connecting the electrode core 200 to the housing body 500 by using the current collector plate 100, ensuring the connection areas, and improving performance of the battery cell 1000 and improving structural stability of the battery cell 1000.

In some embodiments of this application, the first connection portion 121 has a first surface connected to the electrode core 200, the second connection portion 131 has a second surface connected to the housing body 500, and the first surface is parallel to the second surface. Herein, the first connection portion 121 has the first surface, so that the first connection portion 121 is suitable for being connected to the electrode core 200 by using the first surface, thereby electrically connecting the first connection portion 121 to the electrode core 200; and correspondingly, the second connection portion 131 has the second surface, so that the second connection portion 131 is suitable for being connected to the housing body 500 by using the second surface, thereby electrically connecting the second connection portion 131 to the housing body 500. Therefore, the electrode core 200 is electrically connected to the housing body 500 by using the current collector plate 100.

It should be noted that because a side surface that is of the electrode core 200 and that faces the housing body 500 is usually parallel to a side surface that is of the housing body 500 and that faces the electrode core 200 in a process of assembling the battery cell 1000, in this application, the first surface is disposed parallel to the second surface to ensure that the second surface can be effectively connected to the housing body 500 after the first surface is connected to the electrode core 200, thereby ensuring the connection area between the first connection region 120 and the electrode core 200, ensuring the connection area between the second connection portion 131 and the housing body 500, electrically connecting the electrode core 200 to the housing body 500 effectively, and reducing connection difficulty.

In some examples, a surface that is of the first connection portion 121 and that faces the electrode core 200 is defined as the first surface, to facilitate mutual connection between the first surface and the electrode core 200; and correspondingly, a surface that is of the second connection portion 131 and that faces the cover plate 300 is defined as the second surface, to facilitate mutual connection between the second surface and the housing body 500.

In some embodiments of this application, as shown in FIG. 2 and FIG. 3, a plurality of avoidance ports 1312 used for fluid circulation are disposed on a periphery of the second connection portion 131. The avoidance port 1312 is used for communication between two opposite ends of the second connection portion 131, to ensure that gas in the electrode core 200 can smoothly flow.

That is, the avoidance port 1312 of this application is suitable for being formed into an exhaust channel.

Optionally, as shown in FIG. 3, the plurality of avoidance ports 1312 are evenly spaced apart. In this way, the plurality of avoidance ports 1312 cooperate to ensure a more even gas distribution inside the electrode core 200.

It should be noted that the avoidance port 1312 shown in FIG. 3 is formed in a shape similar to rectangle. In some other examples, the avoidance port 1312 may alternatively be formed in a circular shape, a triangle shape, or the like. This is not specifically limited in this application.

It should be further noted that a specific quantity of the plurality of avoidance ports 1312 is not limited in this application. A person skilled in the art may set the quantity based on a gas production amount inside the electrode core 200.

Optionally, as shown in FIG. 3, a radial width of the avoidance port 1312 is W₂, and 0.5 mm≤W₂≤5 mm. It should be noted that the radial width of the avoidance port 1312 herein may be understood as a width that is of the avoidance port 1312 and that extends in the radial direction of the current collector plate 100. When W₂□0.5 mm, an exhaust capability of the avoidance port 1312 is degraded. When W₂□5 mm, manufacturing difficulty of the avoidance port 1312 increases, and the connection area between the second connection portion 131 and the housing body 500 is affected.

Therefore, in this application, the radial width W₂ of the avoidance port 1312 is set to be greater than or equal to 0.5 mm and less than or equal to 5 mm. In this way, it is ensured that the avoidance port 1312 can smoothly exhaust the gas inside the electrode core 200 and it can be ensured that the avoidance port 1312 can be better formed. In addition, the area of the second connection portion 131 is ensured, that is, the connection area between the second connection portion 131 and the housing body 500 is ensured.

In some examples, as shown in FIG. 2, FIG. 3, and FIG. 5, on the first plane, an orthographic projection of an outer peripheral wall of the current collector plate 100 is located on a circle. The first plane is perpendicular to the thickness direction of the current collector plate 100. A stop protrusion 1313 is disposed on the second connection portion 131. The stop protrusion 1313 extends toward the first connection portion 121. The stop protrusion 1313 is located on the outer side in the radial direction of the first connection portion 121. The stop protrusion 1313 is suitable for being located on an outer side in a radial direction of the tab of the electrode core 200. The outer side in the radial direction of the first connection portion 121 herein may be understood as a side that is of the first connection portion 121 and that is close to an outer side in the radial direction of the current collector plate 100 when the shape of the current collector plate 100 is formed as a shape similar to a circle. The stop protrusion 1313 may, on the one hand, reinforce the second connection portion 131, that is, improve structural strength of the second connection portion 131, to avoid deformation when the second connection portion 131 is connected to the housing body 500, thereby ensuring that the second connection portion 131 can be stably connected to the housing body 500, and may, on the other hand, limit a location of the tab by using the second connection portion 131, so that the tab can be stably disposed on the electrode core 200, thereby preventing the electrode core 200 from being failed because a weld seam is pulled by a loose tab in a practical operating condition.

Optionally, as shown in FIG. 2 and FIG. 3, the stop protrusion 1313 extends in a circumferential direction of the second connection portion 131. It may also be understood as that the stop protrusion 1313 extends in the circumferential direction of the current collector plate 100 formed in the circular shape, to increase an area of the stop protrusion 1313, thereby ensuring that the stop protrusion 1313 can effectively improve structural strength of the second connection portion 131, ensuring that the stop protrusion 1313 can effectively limit the location of the tab, and further ensuring that the tab can be stably disposed on the electrode core 200.

In addition, the stop protrusion 1313 extending in the circumferential direction of the second connection portion 131 may further protect the tab, to prolong a service life of the tab, that is, prolong the service life of the electrode core 200.

Certainly, in some other examples, there are a plurality of stop protrusions 1313. The plurality of stop protrusions 1313 are spaced apart in the circumferential direction of the second connection portion 131. In this way, structural strength of the second connection portion 131 may be improved by using the stop protrusions 1313 and the location of the tab may be limited by the stop protrusions 1313.

Optionally, an extension length of the stop protrusion 1313 toward the first connection portion 121 is greater than or equal to an exposure height of the tab, to ensure that the stop protrusion 1313 can effectively protect the tab and limit the location of the tab.

In a specific example, the exposure height of the tab is 0.5 mm-2 mm. That is, the extension length of the stop protrusion 1313 toward the first connection portion 121 is greater than 0.5 mm.

Optionally, the stop protrusion 1313 is defined by bending and deforming a part of the second connection portion 131. That is, in a process of manufacturing the second connection portion 131, a partial structure of the second connection portion 131 bends and deforms to form the stop protrusion 1313. In this way, there is no need to separately connect a structural member to the second connection portion 131 to form the stop protrusion 1313, thereby reducing manufacturing difficulty of the stop protrusion 1313, that is, reducing manufacturing difficulty of the second connection portion 131, and further improving location stability of the stop protrusion 1313.

Optionally, as shown in FIG. 1 and FIG. 2, a reinforcement portion 1311 is disposed on a periphery of the stop protrusion 1313. The reinforcement portion 1311 is configured to improve structural strength of the stop protrusion 1313 and the second connection portion 131, to avoid deformation when the second connection portion 131 is connected to the housing body 500, and further ensure that the stop protrusion 1313 can effectively protect the tab and limit the location of the tab.

Optionally, as shown in FIG. 1 and FIG. 2, there are a plurality of reinforcement portions 1311, and the plurality of reinforcement portions 1311 are spaced apart. The plurality of reinforcement portions 1311 cooperate to maximize structural strength of the stop protrusion 1313 and the second connection portion 131.

Optionally, as shown in FIG. 1 and FIG. 2, the avoidance port 1312 is formed between two adjacent reinforcement portions 1311. That is, only two adjacent reinforcement portions 1311 need to be spaced apart. In this way, the two adjacent reinforcement portions 1311 cooperate to dispose the avoidance port 1312 on the periphery of the second connection portion 131, and there is no need to separately process the avoidance port 1312 on the second connection portion 131, thereby reducing manufacturing difficulty of the avoidance port 1312, that is, reducing manufacturing difficulty of the second connection portion 131, and further improving manufacturing efficiency of the second connection portion 131.

In some embodiments of this application, as shown in FIG. 2 and FIG. 3, the first connection region is provided with a liquid injection port 1221. The liquid injection port 1221 penetrates through the first connection region 120 in a thickness direction of the first connection region 120. Herein, the liquid injection port 1221 is disposed in the first connection region 120, and the liquid injection port 1221 penetrates through the first connection region 120 in the thickness direction of the first connection region 120, to implement communication between two sides of the first connection region 120 in the thickness direction, thereby facilitating liquid injection toward the electrode core 200 through the liquid injection port 1221.

That is, in this application, when the current collector plate 100 is electrically connected to the electrode core 200, normal liquid injection toward the electrode core 200 can be further ensured.

In some examples, as shown in FIG. 3, the liquid injection port 1221 is disposed on the middle portion 122, so that the liquid injection port 1221 can be disposed close to a middle part of the electrode core 200, thereby facilitating liquid injection toward the electrode core 200 through the liquid injection port 1221.

Optionally, as shown in FIG. 2, the liquid injection port 1221 includes a penetration port 1222 and a locating port 1223 that are in mutual communication. The penetration port 1222 facilitates liquid injection toward the electrode core 200, and the locating port 1223 is suitable for fitting with a tooling device to prevent the current collector plate 100 from rotating in a mounting process. The foregoing arrangement may ensure that the liquid injection port facilitates liquid injection toward the electrode core 200, and may further locate the current collector plate 100, to reduce connection difficulty between the current collector plate 100 and the electrode core 200, improve connection efficiency, and ensure connection accuracy between the current collector plate 100 and the electrode core 200.

In addition, the locating port 1223 may further prevent the current collector plate 100 from rotating relative to the electrode core 200, to improve location stability of the current collector plate 100.

In a specific example, the penetration port 1222 is formed into a circular port, to facilitate liquid injection toward the electrode core 200 through the penetration port 1222, and ensure a liquid injection amount. The locating port 1223 is formed into a rectangular port, to facilitate fitting between the locating port 1223 and the tooling device, thereby preventing the current collector plate 100 from rotating in the mounting process, and reducing mounting difficulty of the current collector plate 100.

In some embodiments of this application, the current collector plate 100 is an integrally formed member. That is, the entire current collector plate 100 is manufactured by using a unibody process, thereby reducing manufacturing difficulty of the current collector plate 100, improving manufacturing efficiency, ensuring connection strength and connection quality between the middle portion 122, the first connection portion 121, the second connection portion 131, and the connection member 140, making the structure of the current collector plate 100 stable, and electrically connecting the electrode core 200 to the housing body 500 by using the current collector plate 100.

It should be noted that in a process of producing the current collector plate 100, the current collector plate 100 may be cut and the connection member 140 is bent, to form structures such as the middle portion 122, the first connection portion 121, the second connection portion 131, and the connection member 140 on the current collector plate 100.

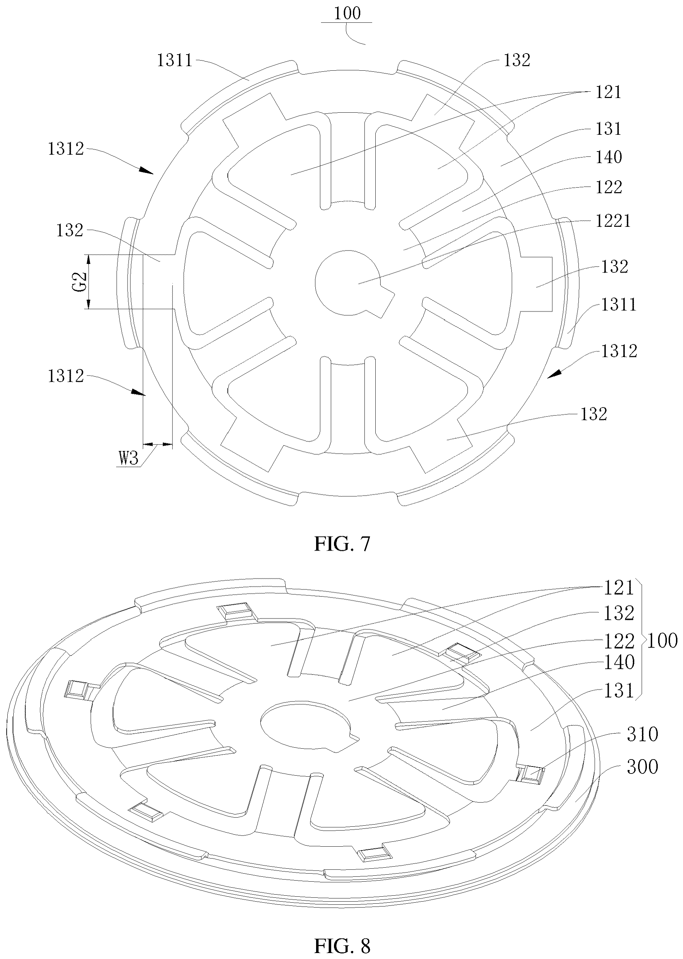

In some examples, as shown in FIG. 7 and FIG. 8, a limiting notch 132 is disposed on the second connection portion 131, and the limiting notch 132 is suitable for being in limit fit with a limiting protrusion 310 on the housing body 500. That is, the limiting protrusion 310 is disposed on the housing body 500, and the limiting notch 132 is disposed on the second connection portion 131, so that the second connection portion 131 and the housing body 500 can be in location fit after the limiting protrusion 310 and the limiting notch 132 are in limit fit, thereby preventing locations of the second connection portion 131 and the housing body 500 from changing relative to each other in a connection process, reducing connection difficulty between the second connection portion 131 and the housing body 500, and improving connection efficiency.

Optionally, as shown in FIG. 2 and FIG. 7, the radial width of the second connection portion 131 is W₁, and a radial width W₃ of the limiting notch 132 meets the following condition: 0.5 mm≤W₃□W₁. That is, the limiting notch 132 has a specific width in the radial direction of the current collector plate 100 formed in the circular shape, to facilitate formation of the limiting notch 132, thereby facilitating location fit between the second connection portion 131 and the housing body 500 through the limiting notch 132. In addition, the radial width of the limiting notch 132 is set to be less than the radial width of the second connection portion 131, to prevent structural strength and the connection area of the second connection portion 131 from being reduced due to the limiting notch 132, thereby ensuring that the second connection portion 131 has specific structural strength, prolonging the service life, and ensuring a specific connection area between the second connection portion 131 and the housing body 500.

Optionally, as shown in FIG. 7, a circumferential length of the limiting notch 132 is G₂, 0.5 mm≤G₂≤ΠR₁/n₁, n₁ is a quantity of limiting notches, Π is a circumference, and Π≈3.14. When it is ensured that the limiting notch 132 has a specific extension length to fit with the limiting protrusion 310, the area of the second connection portion 131 can be further prevented from being decreased excessively due to the limiting notch 132, that is, there is the specific connection area between the second connection portion 131 and the housing body 500, to fixedly connect the current collector plate 100 to the housing body 500.

Optionally, as shown in FIG. 7, there are a plurality of limiting notches 132. The plurality of limiting notches 132 and the plurality of first connection portions 121 are oppositely disposed in a one-to-one correspondence in the radial direction of the second connection portion 131. The plurality of limiting notches 132 are disposed to ensure effective location fit between the second connection portion 131 and the housing body 500. The plurality of limiting notches 132 and the plurality of first connection portions 121 are oppositely disposed in a one-to-one correspondence, so that the limiting notch 132 can be disposed away from the connection member 140, thereby preventing the limiting notch 132 from affecting fixed connection between the second connection portion 131 and the middle portion 122, that is, ensuring that the limiting notch 132 can effectively implement location fit between the second connection portion 131 and the housing body 500, ensuring that the second connection portion 131 and the middle portion 122 can be fixedly connected effectively, and ensuring location stability and structural strength of the current collector plate 100.

The following describes a battery cell 1000 according to an embodiment of this application with reference to the accompanying drawings of the specification.

As shown in FIG. 1, the battery cell 1000 according to this embodiment of this application includes a housing body 500, an electrode core 200, and a current collector plate 100. That is, the battery cell 1000 includes the housing body 500 and an electrode core assembly 600.

An accommodating cavity is formed in the housing body 500.

The electrode core 200 is disposed in the accommodating cavity. That is, the electrode core 200 is suitable for being disposed in the housing body 500, to protect the electrode core 200 by using the housing body 500, thereby prolonging a service life of the electrode core 200, and improving use safety of the electrode core 200.

The current collector plate 100 is the foregoing current collector plate 100, the current collector plate 100 is disposed between the electrode core 200 and the housing body 500, the first connection region 120 is electrically connected to the electrode core 200, and the second connection region 130 is electrically connected to the housing body 500.

It can be learned from the foregoing structure that in the battery cell 1000 of this embodiment of this application, the foregoing current collector plate 100 is used, and the first connection region 120 of the current collector plate 100 is disposed to be electrically connected to the electrode core 200. In this way, a connection area between the current collector plate 100 and the electrode core 200 can be effectively ensured, and problems such as insufficient current flow and serious heat generation of the electrode core 200 are avoided, thereby prolonging a service life of the battery cell 1000, and improving use safety of the battery cell 1000.

Optionally, as shown in FIG. 1, the housing body 500 includes a housing 400 and a cover plate 300. An accommodating cavity with an opening is formed in the housing 400, and the electrode core 200 is disposed in the accommodating cavity. The cover plate 300 is disposed at the opening. The current collector plate 100 is disposed between the electrode core 200 and the cover plate 300. The first connection region 120 is electrically connected to the electrode core 200. The second connection region 130 is electrically connected to the cover plate 300. Therefore, the electrode core 200 is electrically connected to the cover plate 300. That is, in this example, the second connection region 130 is mainly electrically connected to the cover plate 300.

It should be noted that because the accommodating cavity with the opening is formed in the housing 400, the opening is suitable for implementing communication between an inside and an outside of the accommodating cavity, to ensure that external components (such as the current collector plate 100 and the electrode core 200) can be disposed in the accommodating cavity; and because the cover plate 300 is disposed at the opening, the opening can be blocked by the cover plate 300, to prevent external foreign objects, dust, and the like from entering the accommodating cavity through the opening, thereby improving use safety of the electrode core 200, that is, improving use safety of the battery cell 1000.

In some other examples, the housing body 500 includes a housing 400 and a cover plate 300. An accommodating cavity with an opening is formed in the housing 400. The electrode core 200 is disposed in the accommodating cavity. The cover plate 300 is disposed at the opening. The current collector plate 100 is disposed between the electrode core 200 and the housing 400. The first connection portion 121 is electrically connected to the electrode core 200. The second connection region 130 is electrically connected to the housing 400. Therefore, the electrode core 200 is electrically connected to the housing 400. That is, in this example, the second connection region 130 is mainly electrically connected to the housing 400 (this example is not shown in the figure).

Optionally, the battery cell 1000 is a cylindrical battery, so that structures (the electrode core 200 and the cover plate 300) in the battery cell 1000 can be adapted to the circular current collector plate.

In some embodiments of this application, a product of a quantity of first connection portions 121, a compensation coefficient, a current flow coefficient of the first connection portion 121, and the minimum connection area between the first connection portion 121 and the electrode core 200 is greater than or equal to a lowest current flow requirement of the electrode core 200, that is, the minimum connection area S between the first connection portion 121 and the electrode core 200 and the lowest current flow requirement C of the electrode core 200 meet the following relational expression: nNKS≥C; and n is the quantity of first connection portions 121, N is the compensation coefficient, N=0.7~1, and K is the current flow coefficient of the first connection portion 121.

It should be noted that K may be directly determined based on a material of the first connection portion 121, and a unit is AH/mm²; and the lowest current flow requirement C of the electrode core 200 may be determined based on required charging duration of the electrode core 200. A specific determining manner is as follows: In a practical production process of the battery cell 1000, fast charging duration that needs to be met by a to-be-produced battery cell 1000 may be directly determined, that is, charging duration of the battery cell 1000 may be explicitly learned of; charging duration of the electrode core 200 is determined based on the charging duration of the battery cell 1000; the lowest current flow requirement C of the electrode core 200 is then obtained based on the charging duration of the electrode core 200; and finally the minimum connection area S between the first connection portion 121 and the electrode core 200 is calculated based on the lowest current flow requirement C, so that the minimum connection area S between the first connection portion 121 and the electrode core 200 and the lowest current flow requirement C of the electrode core 200 can meet a specific condition, thereby ensuring that a current flow capability of the current collector plate 100 can meet the lowest current flow requirement of the electrode core 200, avoiding insufficient current flow of the electrode core 200, avoiding the serious heat generation problem of the electrode core 200, and prolonging the service life of the electrode core 200 and improving use safety of the electrode core 200.

In some specific examples, the lowest current flow requirement C of the electrode core 200 = 15 AH-120 AH.

Optionally, a connection width H between the first connection portion 121 and the middle portion 122 and the lowest current flow requirement C of the electrode core 200 meet a specific condition, to ensure the current flow capability of the current collector plate 100.

The connection width H herein may be understood as a straight-line distance between opposite sidewalls at a connection location between the first connection portion 121 and the middle portion 122. That is, there are two oppositely disposed sidewalls at the connection location between the first connection portion 121 and the middle portion 122, and the straight-line distance between the two sidewalls forms the connection width H between the first connection portion 121 and the middle portion 122 (for the connection width H, specifically refer to FIG. 3).

Specifically, the product of the quantity of first connection portions 121, the current flow coefficient of the current collector plate 100, the connection width between the first connection portion 121 and the middle portion 122, and a thickness of the first connection portion 121 is greater than or equal to the lowest current flow requirement of the electrode core 200, that is, the connection width H between the first connection portion 121 and the middle portion 122 and the lowest current flow requirement C of the electrode core 200 meet the following condition: nKHδ≥C; and n is the quantity of first connection portions 121, δ is the thickness of the first connection portion 121, K is the current flow coefficient of the current collector plate 100, and K may be directly determined based on the material of the current collector plate 100 and a unit is AH/mm².

That is, in the practical production process of the battery cell 1000, it is ensured that the minimum connection area S between the first connection portion 121 and the electrode core 200 and the lowest current flow requirement C of the electrode core 200 meet the specific condition, and the connection width H between the first connection portion 121 and the middle portion 122 and the lowest current flow requirement C of the electrode core 200 also need to meet the specific condition, thereby effectively ensuring the current flow capability of the current collector plate 100.

A specific determining method of the connection width H between the first connection portion 121 and the middle portion 122 is as follows: In the practical production process of the battery cell 1000, the charging duration of the battery cell 1000 may be directly determined; after the charging duration of the battery cell 1000 is explicitly determined, the charging duration of the electrode core 200 is first determined based on the charging duration of the battery cell 1000 and the lowest current flow requirement C of the electrode core 200 is obtained based on the charging duration of the electrode core 200; and finally, the connection width H between the first connection portion 121 and the middle portion 122 is calculated based on the lowest current flow requirement C, the quantity of first connection portions 121, and the thickness of the first connection portion 121, so that the connection width H between the first connection portion 121 and the middle portion 122 and the lowest current flow requirement C of the electrode core 200 meet the specific condition.

The following describes a battery pack 2000 according to an embodiment of this application.

The battery pack 2000 according to this embodiment of this application includes a plurality of battery cells 1000, and each of the battery cells 1000 is the foregoing battery cell 1000.

It can be learned from the foregoing structure that in the battery pack 2000 of this embodiment of this application, the foregoing battery cell 1000 is used to improve structural stability of the battery pack 2000, thereby prolonging a service life of the battery pack 2000 and improving use safety of the battery pack 2000.

The following describes an electric apparatus 3000 according to an embodiment of this application.

As shown in FIG. 9, the electric apparatus 3000 according to this embodiment of this application includes a battery pack 2000, and the battery pack 2000 is the foregoing battery pack 2000.

It can be learned from the foregoing structure that in the electric apparatus 3000 according to this embodiment of this application, the foregoing battery pack 2000 is used, that is, the foregoing battery cell 1000 is used, to improve use safety of the electric apparatus 3000, thereby prolonging a service life of the electric apparatus 3000 and reducing use costs.

It should be noted that the electric apparatus 3000 herein may be a vehicle, an energy storage cabinet, a ship, an aircraft, or the like.

Both FIG. 2 and FIG. 3 show six first connection portions 121 for exemplary description. However, a person of ordinary skill in the art, after reading the foregoing technical solution, may obviously understand that this solution is expanded as a technical solution with first connection portions 121 of another quantity, which also falls within the protection scope of this application.

Other components of the electrode core assembly 600, the battery cell 1000, the battery pack 2000, and the electric apparatus 3000 according to the embodiments of this application are already known to a person of ordinary skill in the art. Details are not described herein again.

Although the embodiments of this application have been shown and described, a person of ordinary skill in the art may understand that various changes, modifications, replacements, and variations may be made to these embodiments without departing from the principles and objectives of this application, and the scope of this application is defined by the claims and equivalents thereof.

## Claims

1. An electrode core assembly, comprising:
an electrode core; and
a current collector plate, wherein the current collector plate comprises a first connection region and a second connection region that are connected to each other, the first connection region comprises a middle portion and a plurality of first connection portions, the plurality of first connection portions are spaced apart in a circumferential direction of the middle portion, each of the first connection portions is connected to the middle portion, the plurality of first connection portions are electrically connected to the electrode core, and the second connection region located in one side of the first connection region is suitable for being electrically connected to a housing body; and
an area of an orthographic projection of each of the first connection portions on a first plane is S₁, a minimum connection area between each of the first connection portions and the electrode core is S, the minimum connection area between each of the first connection portions and the electrode core is greater than or equal to 20% of the area of the orthographic projection of each of the first connection portions on the first plane, that is, the electrode core assembly meets the following relationship: S≥20%S₁, and a thickness direction of the current collector plate is perpendicular to the first plane.

2. The electrode core assembly according to claim 1, wherein an identifier region is disposed on the first connection portion, and the identifier region is welded to the electrode core.

3. The electrode core assembly according to claim 1 or 2, wherein the second connection region comprises a second connection portion, the second connection portion is formed into an annular structure, the annular structure extends in a circumferential direction of the first connection region, an inner peripheral wall of the second connection portion is connected to the middle portion by using a connection member, and there is a height difference between the first connection region and the second connection region.

4. The electrode core assembly according to claim 3, wherein the connection member obliquely extends toward the second connection portion relative to the middle portion.

5. The electrode core assembly according to claim 3 or 4, wherein a radial width of the second connection portion is W₁, the radial width of the second connection portion is greater than or equal to 1 mm and less than or equal to half a radius of the current collector plate, that is, 1 mm≤W₁≤½R₁, and R₁ is the radius of the current collector plate.

6. The electrode core assembly according to any one of claims 3-5, wherein orthographic projections of outer peripheral walls of the plurality of first connection portions on the first plane are separately located in a same circle, each of the first connection portions is formed into a fan-shaped structure, there are a plurality of evenly spaced connection members, and the plurality of connection members and the plurality of first connection portions are alternately disposed in a circumferential direction.

7. The electrode core assembly according to any one of claims 3-6, wherein the first connection portion has a first surface connected to the electrode core, the second connection portion has a second surface connected to the housing body, and the first surface is parallel to the second surface.

8. The electrode core assembly according to any one of claims 1-7, wherein the first connection region is provided with a liquid injection port that penetrates through the first connection region in a thickness direction of the first connection region.

9. The electrode core assembly according to any one of claims 1-8, wherein the current collector plate is an integrally formed member.

10. A battery cell, comprising:
a housing body, wherein an accommodating cavity is formed in the housing body; and
an electrode core assembly, wherein the electrode core assembly is the electrode core assembly according to any one of claims 1-9, and the electrode core is disposed in the accommodating cavity; and
the current collector plate is disposed between the electrode core and the housing body, the first connection portion is electrically connected to the electrode core, and the second connection region is electrically connected to the housing body.

11. The battery cell according to claim 10, wherein a product of a quantity of first connection portions, a compensation coefficient, a current flow coefficient of the first connection portion, and the minimum connection area between the first connection portion and the electrode core is greater than or equal to a lowest current flow requirement of the electrode core, that is, the minimum connection area S between the first connection portion and the electrode core and the lowest current flow requirement C of the electrode core meet the following relational expression:
nNKS≥C; and
n is the quantity of first connection portions, N is the compensation coefficient, N=0.7~1, and K is the current flow coefficient of the first connection portion.

12. A battery pack, comprising a plurality of battery cells according to claim 10 or 11.

13. An electric apparatus, comprising the battery pack according to claim 12.
